# EUROPÄISCHE PATENTSCHRIFT

(11) **EP 1 293 323 B1**
(45) Veröffentlichungstag und Bekanntmachung des Hinweises auf die Patenterteilung: **12.04.2006**
(21) Anmeldenummer: 02018608.6
(22) Anmeldetag: 20.08.2002
(51) Int. Cl.: B29C 45/18

(54) **Verfahren und Vorrichtung zum Spritzgiessen von Flüssigsilikonkautschuk (LSR)**
Method and device for injection moulding of liquid silicon rubber (LSR)
Procédé et dispositif pour le moulage de liquide de caoutchouc de silicone (LSR)

(30) Priorität: 14.09.2001 DE 10145560
(43) Veröffentlichungstag der Anmeldung: 19.03.2003
(73) Patentinhaber: Demag Ergotech GmbH, 90571 Schwaig (DE)
(72) Erfinder: Brix, Helmut, 06642 Wohlmirstedt (DE); Rapp, Gerhard, 71691 Feiberg/Neckar (DE)
(74) Vertreter: Wilhelm, Ludwig

(56) Entgegenhaltungen:
- US-A- 4 897 027
- STEINBICHLER G: "WIRTSCHAFTLICHE VERARBEITUNG NEUER LSR-TYPEN BEIM SPRITZGIESSEN" , KUNSTSTOFFBERATER, KUNSTSTOFF VERLAG. ISERNHAGEN, DE, VOL. 43, NR. 5, PAGE(S) 20-26 XP000751872 ISSN: 0172-6374 * Seite 22, mittlere Spalte - rechte Spalte *
- KRAIBUEHLER H: "SILIKON VERBINDET NEUE KONZEPTE FUER DIE SPRITZGIESSVERARBEITUNG" , KUNSTSTOFFE, CARL HANSER VERLAG. MUNCHEN, DE, VOL. 91, NR. 4, PAGE(S) 88-89 XP001038948 ISSN: 0023-5563 * Seite 89, linke Spalte *
- DR RER NAT E BRANDAU: "Reaktionsharzgebundene Produkte in der Elektrotechnik" , KUNSTSTOFFE, CARL HANSER VERLAG. MUNCHEN, DE, VOL. 75, NR. 3, PAGE(S) 168-172 XP002098079 ISSN: 0023-5563 * Abbildung 5 *
- PATENT ABSTRACTS OF JAPAN vol. 010, no. 311 (M-528), 23. Oktober 1986 (1986-10-23) & JP 61 121903 A (MATSUSHITA ELECTRIC IND CO LTD), 9. Juni 1986 (1986-06-09)

## Beschreibung

Die Erfindung betrifft ein Verfahren zum Spritzgießen von Flüssigsilkontschuk gemäß den Oberbegriffen der nebengeordneten von Patentansprüche 1 und 6 sowie Vorrichtungen zur Durchführung der Verfahren gemäß den Oberbegriffen der nebengeordneten Patentansprüche 11 und 19.

Silikonkautschuk ist ein Sammelbegriff für ein spezielles Elastomer, das auf Siloxanbasis basiert. Seine chemische Struktur ist durch die Siloxankette (-Si-O-Si-O-) gekennzeichnet, wobei sich an die Si-Atome organische Methyl-, Phenyl-, Hydroxyl-Gruppen und Ähnliches als Liganden anschließen. Prinzipell unterscheidet man Fest- und Flüssigsilikonkautschuke (LSR = Liquid Silicon Rubber). Man kann sie anhand ihrer Kettenlänge differenzieren, wobei Flüssigsilikone aus bis zu 1000 Wiederholungseinheiten und Festkautschuke aus bis zu 6000 - 10000 Wiederholungseinheiten bestehen. Bei der Silikonvernetzung unterscheidet man zwei wesentliche Gruppen. Zum einen die bei Raumtemperatur vernetzenden RTV (raumtemperaturvernetzenden)-Typen und zum anderen die unter Heißvulkanisation vernetzenden HTV (hochtemperaturvernetzenden)-Typen.

Die vorliegenden Erfindung betrifft den Bereich der zu den HTV-Typen zählenden Flüssigsilikone, die beim Spritzgießen zunehmend an Bedeutung gewinnen. Es sind Zweikomponentenmischungen aus niedrigviskosen vinyi- oder wasserstofffunktionellen Polysiloxanen mit Füllstoffen und kleinen Mengen eines Platinkatalysators, die nach dem Prinzip der Additionsvernetzung reagieren. Zusätzlich enthalten die Mischungen einen Inhibitor, auch Topfzeitregler genannt, der die Verarbeitungszeit bis zum Vernetzungsbeginn beeinflußt. Der Komponente A ist der Inhibitor, der Komponente B der Katalysatorvernetzer beigemischt. Additionsvernetzung heißt, die Edukte reagieren miteinander unter Einwirkung eines Katalysators zum Endprodukt ohne Bildung eines Spaltproduktes. Für die Flüssigsilikone bedeutet dies, das wasserstofffunktionelle Polysiloxan verbindet sich mit dem vinylfunktionellen Polysiloxan unter Katalysatoreinwirkung (beeinflusst nur die Reaktionsgeschwindigkeit; liegt nach der Reaktion im Urzustand vor). Ein weiteres Verfahren zur Herstellung ist die Peroxidvernetzung. Dabei zerfallen organische Peroxide infolge der Labilität der O-O-Rindung unter Wärmeeihfluss in freie Radikale. Sie reagieren mit den Vinyl- oder Methylgruppen des Polysiloxangerüstes unter Ausbildung von Hydroxylverbindungen und ermöglichen so Vernetzungsvorgänge, die zwischen den einzelnen Monomeren zur Ausbildung von Atombindungen führen.

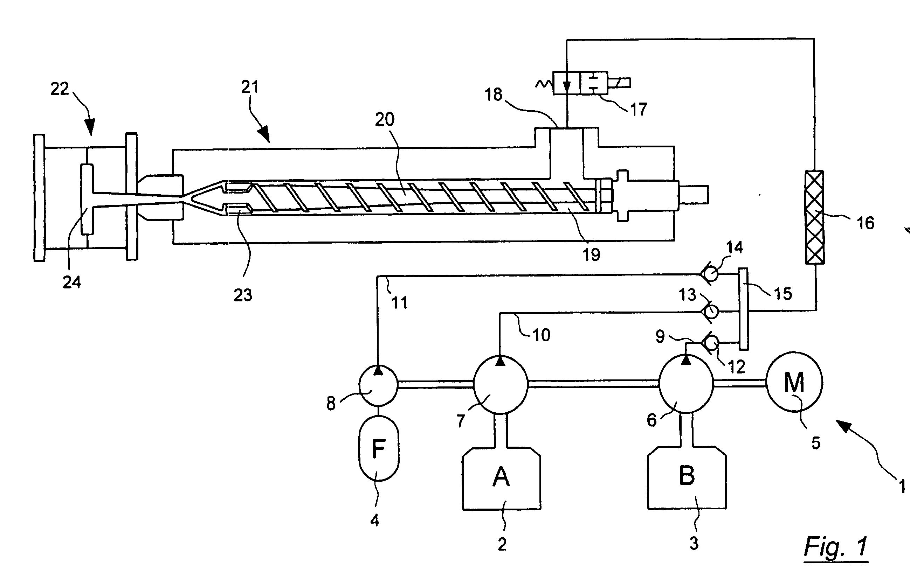

Figur 1 zeigt eine aus dem Stand der Technik bekannte Spritzgießmaschine zum Spritzgießen von Formteilen aus Flüssigsilikonkautschuk (siehe zum Beispiel DE 3400309 A1). Die Dosieranlage 1 verfügt über Vorratsbehälter 2 und 3 für die Komponenten A und B sowie über einen Vorratsbehälter 4 für ein Additiv oder eine Farbkomponente. Mittels eines Motors 5 angetriebene Pumpen 6, 7 und 8 fördern die Ausgangskomponenten A, B und das Additiv (oder den Farbstoff) durch Schlauchleitungen 9, 10, und 11 und durch Rückschlagventile 12, 13, und 14 in den Mischkopf 15. Von dort gelangt das Gemisch in den statischen Mischer 16. Die Vermischung der Komponenten erfolgt in dem statischen Mischer 16 durch Stromteilungselemente, die den Materialstrom vielfach verschichten. Danacht tritt das Gemisch über ein Absperrventil 17 und ein Adapterstück 18 in die Einzugszone 19 der Plastifizierschnecke 20 der Plastifiziereinheit 21 ein. Durch die rotatorische Bewegung der Plastifizierschnecke 20 wird das Material in den Schneckenvorraum transportiert und die Vermischung der Komponenten durch die dynamische Vermischung verbessert. Der Schneckenzylinder ist mit einer Wassertemperierung ausgestattet, um eine zu starke Erwärmung des Gemisches zu verhindern. Im folgenden Einspritzvorgang drückt die Schnecke 20 das Material als Kolben über ein nicht dargestelltes Kaltkanalsystem in das Werkzeug 22. Ein Rückströmen des sehr niedrigviskosen Gemisches aus dem Schneckenvorraum in den vorderen Schneckenraum wird durch eine spezielle Rückströmsperre (LSR-Design) 23 verhindert. In der Kavität 24 erfolgt die Additionsvernetzung, wenn die notwendige Aktivierungsenergie durch Erwärmung des Gemischs überschritten wird. Die Vulkanisation erfolgt bei etwa 170 - 200°C und mit Vernetzungsgeschwindigkeiten von etwa 5 s pro mm Wanddicke des Formteils.

Die Hauptanwendungsgebiete flüssiger Silikonkautschuke sind Kleinteile wie beispielsweise Babyflaschensauger, Mundstücke von Narkosegeräten, und Dichtungen für unterschiedlichste Anwendungszwecke, von Spritzenkolbendichtungen in der Medizintechnik bis zu O-Ringen im Fahrzeug- und Maschinenbau.

Die bekannten Dosieranlagen fördern die beiden Komponenten A und B mit einem bestimmten, einstellbaren Druck von den Vorratsbehältern durch den statischen Mischer direkt in die Plastifiziereinheit der Spritzgießmaschine. Da der bei der Förderung des Materials zurückgelegte Weg zwischen den Vorratsbehältern und der Plastifiziereinheit oft sehr lang ist, kann der Druck im Bereich der Einzugszone der Plastifiziereinheit schwanken, was zu ungleichem Materialeinzug und damit zu Dosierschwankungen bzw. Schwankungen im Schußgewicht führt. Dies ist gerade bei der Verarbeitung von Kleinstmengen an Flüssigsilikon problematisch und kann zu Qualitätsproblemen führen, weil beispielsweise die Teile nicht vollständig gespritzt oder gar überspritzt sind. Ein weiteres wesentliches Problem besteht darin, daß aufgrund der kleinen Schußgewichte der Durchfluss der Komponenten durch den statischen Mischer sehr gering ist, was sich nachteilig auf die Durchmischung der Komponenten auswirkt.

Demgegenüber liegt der Erfindung die Aufgabe zugrunde, ein Verfahren zum Spritzgießen von Flüssigsilikonkautschuk oder anderen aus mehreren Komponenten bestehenden Gemschen anzugeben, das zum einen eine bessere Durchmischung der Komponenten erzielt und das zum anderen Druckschwankungen im Bereich der Einzugszone der Plastifiziereinheit vermeidet. Der Erfindung liegt weiterhin die Aufgabe zugrunde, eine Vorrichtung zur Durchführung des Verfahrens anzugeben.

Die Lösung der zuerst genannten Aufgabe erfolgt durch die Verfahren mit den Merkmalen der nebengeordneten Patentansprüche 1 und 6. Die Lösung der zweitgenannten Aufgabe erfolgt durch Vorrichtungen mit den Merkmalen der nebengeordneten Patentansprüche 11 und 19. Vorteilhafte Ausgestaltungen und Weiterentwicklungen finden sich in den Unteransprüchen. Dadurch, daß erfindungsgemäß ein Mehrfaches der für einen Spritzgußzyklus benötigten Menge an Ausgangsmaterial durch den Mischer bewegt wird, wird ein wesentlich besserer Durchmischungsgrad erzielt als dies beim Stand der Technik der Fall ist.

Nachfolgend soll die Erfindung anhand von Ausführungsbeispielen und unter Bezugnahme auf die Figuren näher erläutert werden.

Es zeigen:
- Fig.1: LSR-Spritzgießmaschine gemäß dem Stand der Technik;
- Fig.2: LSR-Spritzgießmaschine gemäß der Erfindung mit einer Schneckenplastiziereinheit als Einspritzeinheit;
- Fig.3: LSR-Spritzgießmaschine gemäß der Erfindung mit einer Kolbeneinspritzeinheit;
- Fig.4: LSR-Spritzgießmaschine gemäß der Erfindung mit zwei Reservoiren.

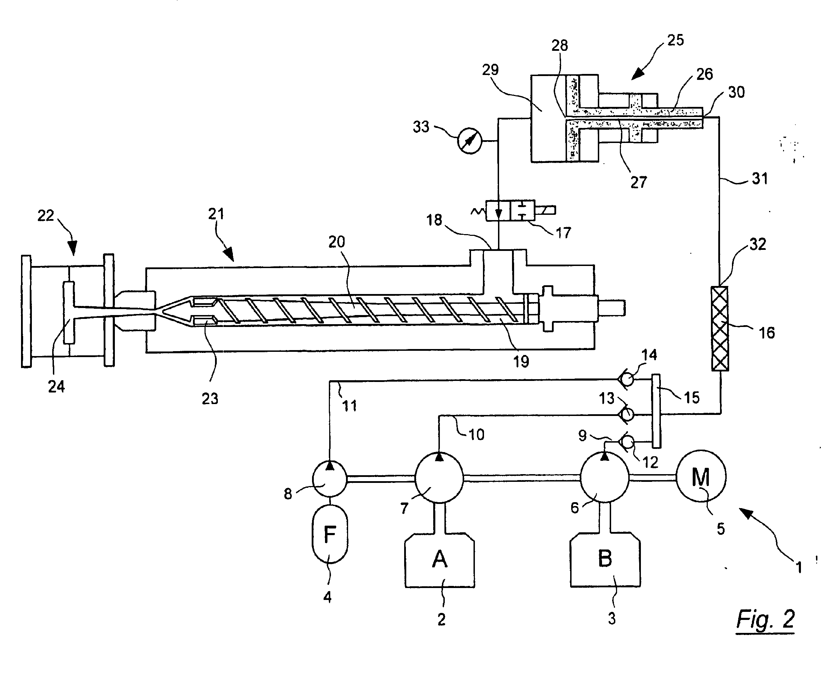

Figur 2 zeigt schematisch eine erste Ausführungform einer erfindungsgemäßen LSR-Spritzgießmaschine. Die Vorrats- und Dosieranlage 1 entspricht in ihrem Aufbau dem Stand der Technik, wie er im Zusammenhang mit Figur 1 beschrieben worden ist. Erfindungsgemäß ist zwischen dem statischen Mischer 16 und dem Absperrventil 17 der Schneckenplastifizieinheit 21 ein Dosierzylinder 25 vorgesehen. Der Dosierkolben 26 weist einen Kanal 27 auf, dessen vorderes Ende 28 in den als Reservoir fungierenden Dosierkolbenvorraum 29 mündet, und dessen hinteres Ende 30 über eine Schlauchleitung 31 mit der Austrittsöffnung 32 des statischen Mischers 16 verbunden ist. Gegebenenfalls kann in dem Kanal 27 zusätzlich zu den schon vor dem Mischkopf 15 vorhandenen Rückschlagventilen 12, 13 und 14 ein weiteres - hier nicht dargestelltes - Rückschlagventil vorgesehen werden. Der Dosierzylinder sowie der Dosierkolben sind gekühlt. Ein Drucksensor 33 sorgt für die Einhaltung konstanter Druckverhältnisse im Reservoir 29.

Die Arbeitsweise dieser LSR-Spritzgießmaschine ist wie folgt. Durch Einstellen eines geeigneten Drucks in der Vorrats- und Dosieranlage 1 und der Motor- 5 und Pumpenleistung 6,7,8 werden die Komponenten A und B sowie das Additiv zu dem statischen Mischer 16 gefördert und dort gemischt. Über die Schlauchleitung 31 und den Kanal 27 gelangt das Gemisch in den Dosierkolbenvorraum bzw. in das Reservoir 29. Durch das Befüllen dieses Reservoirs 29 wird der Dosierkolben 26 nach hinten verschoben bis er seine Endposition erreicht hat. Der Füllvorgang ist nun beendet. Bei Rotation der Plastifizierschnecke 20 wird die jeweils gewünschte Menge an Gemisch in der Einzugszone 19 in die Plastifizier- und Einspritzeinheit 21 aktiv eingezogen und durch Nachführung des Dosierkolbens 26 wird der Druck in dem Reservoir 29 konstant gehalten. Zur Betätigung des Dosierkolbens 26 können hydraulische, elektrische oder pneumatische Antriebe eingesetzt werden. Mit jedem Spritzgießzyklus wird der Dosierkolben 26 nach und nach jeweils um eine solche Strecke nach vorwärts bewegt, die der für einen Spritzgußzyklus benötigten Menge an Gemisch entspricht. Das Reservoir 29 wird also nach und nach um das jeweilige Schussgewicht entleert. Erreicht der der Dosierkolben 26 eine einstellbare, vordere Endposition, werden die Faßpumpen 6, 7, und 8 aktiviert, die dann mit einem höheren Druck als er im Reservoir 29 herrscht neues Material in den Dosierzylinder 25 fördern. Da die Druckregelung den Druck im Reservoir 29 konstant hält, wird der Kolben nach oben ausweichen, bis er seine hintere Endposition erreicht hat. Während des Auffüllens muß das Spritzgießen nicht unterbrochen werden.

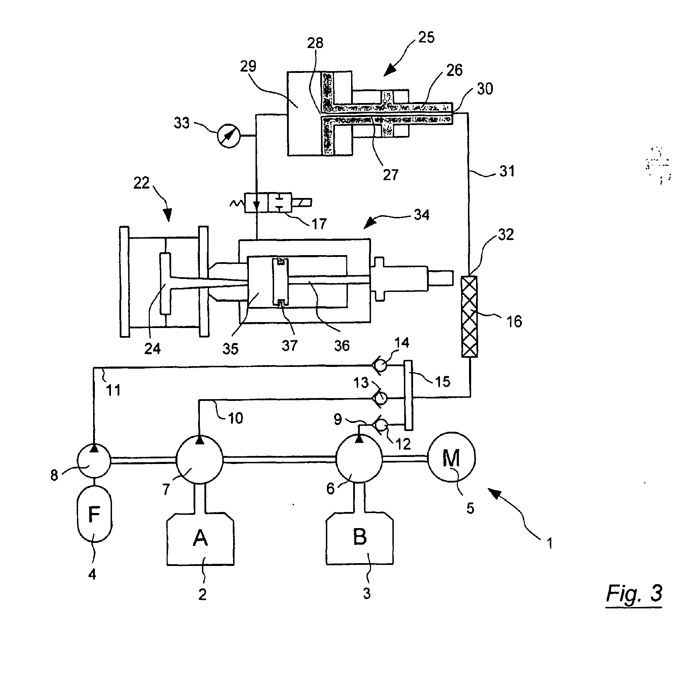

Bei der in Figur 3 gezeigten Ausführungsform wird als Einspritzeinheit eine Kolbeneinspritzeinheit 34 verwendet. Die Befüllung des Kolbenvorraums 35 erfolgt über eine seitliche Enfüllöffnung im vorderen Bereich des Kolbenvorraums 35. Die Befüllung des Kolbenvorraums 35 kann aber auch wie bei dem Dosierzylinder 25 erfolgen, d.h. durch einen in dem Einspritzkolben 36 verlaufenden Kanal, dessen hinteres Ende über eine Schlauchverbindung oder eine ineinander verschiebbare Rohrverbindung mit der Austrittsöffnung des Reservoirs 29 in Verbindung steht. Der Kolbenvorraum 35 wird in der Regel mit dem jeweiligen Schussgewicht plus der für den Nachdruck erforderlichen Menge an Gemisch gefüllt. Aufgrund der niedrigen Viskosität des LSR-Gemisches bietet es sich an, den Einspritzkolben 36 an seinen in dem Zylinder gleitenden Aussenseiten mit elastischen Komponenten 37 auszustatten, beispielsweise mit einem geeigneten O-Ring.

Da bei Verwendung einer Einspritzeinheit vom Typ Kolbeneinspritzeinheit gemäß Figur 3 nach dem Reservoir 29 die weitere, dynamische Mischung durch die Plastizierschnecke wegfällt, kann es je nach Umständen erforderlich sein, anstelle des statischen Mischers einen dynamischen Mischer zu verwenden, auch wenn durch die größere Durchflussmenge durch den statischen Mischer erfindungsgemäß schon eine gegenüber dem Stand der Technik verbesserte Durchmischung erzielt wird.

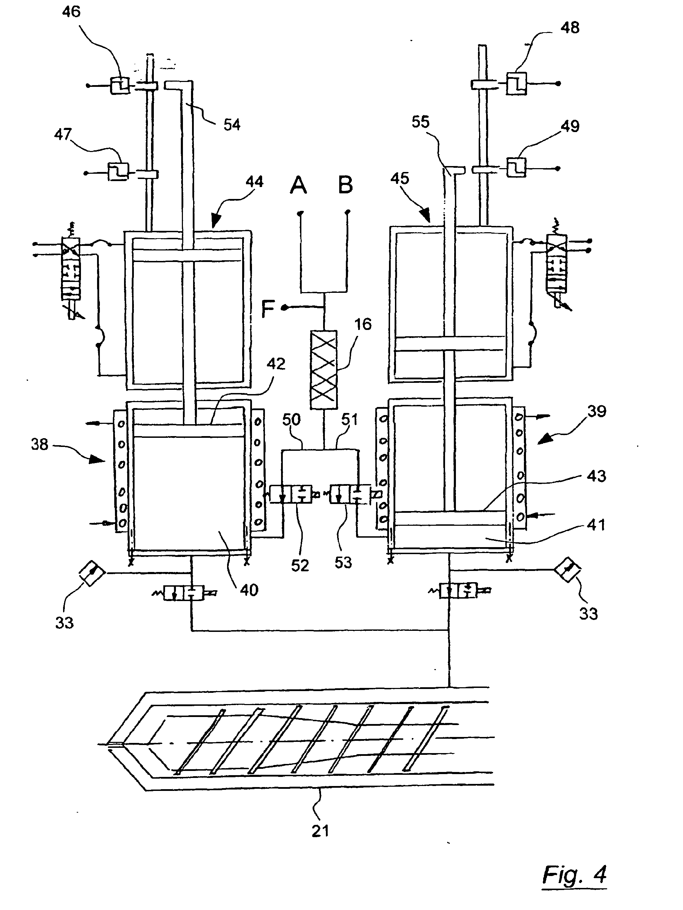

Figur 4 zeigt eine weitere Variante der erfindungsgemäßen LSR-Spritzgießmaschine. Im Gegensatz zu der Ausführungsform von Figur 2 sind nunmehr dem Mischer 16 zwei Dosierzylinder 38 und 39 nachgeschaltet, so daß zwei Reservoire 40 und 41wechselweise befüllt werden können. Die Betätigung der Dosierkolben 42 und 43 erfolgt vorliegend hydraulisch mittels Kolben-Zylinder-Einheiten 44 und 45. Zur Festlegung und Erfassung der hinteren und der vorderen Endpositionen der Dosierkolben sind Positionsgeber 46, 47 und 48, 49 vorgesehen. Während des Betriebs wird das Gemisch nach dem statischen Mischer wechselweise über die Schlauchleitungen 50 und 51 sowie Ventile 52 und 53 in die Dosierzylinder 38 und 39 gefördert. Mittels Drucksensoren 33 wird der Druck in dem jeweiligen Reservoir 40, 41 überwacht, so daß er konstant gehalten werden kann. Diese Ausführungsform bietet den zusätzlichen Vorteil, daß das Wiederbefüllen eines gerade entleerten Dosierzylinders nicht das Dosieren der Plastifiziereinheit 21 beeinflusst, da hierfür der andere (zuvor befüllte) Dosierzylinder bereitsteht.

Die Ausführungsbeispiele sind anhand eines Flüssigsilikonkautschukgemisches (LSR) beschrieben worden. Mit der Erfindung können jedoch auch andere aus mehreren Komponenten bestehende Gemische verarbeitet werden.

### Bezugszeichenliste

- 1: Vorrats- und Dosieranlage
- 2: Vorratsbehälter für Komponente A
- 3: Vorratsbehälter für Komponente B
- 4: Vorratsbehälter für Additiv
- 5: Motor
- 6: Pumpe
- 7: Pumpe
- 8: Pumpe
- 9: Schlauchleitung
- 10: Schlauchleitung
- 11: Schlauchleitung
- 12: Rückschlagventil
- 13: Rückschlagventil
- 14: Rückschalgventil
- 15: Mischkopf
- 16: Statischer Mischer
- 17: Absperrventil
- 18: Adapterstück
- 19: Einzugszone
- 20: Plastifizierschnecke
- 21: Plastifzier- und Einspritzeinheit
- 22: Werkzeug
- 23: Rückströmsperre
- 24: Kavität
- 25: Dosierzylinder
- 26: Dosierkolben
- 27: Kanal
- 28: Vorderes Ende des Kanals 27
- 29: Reservoir bzw. Dosierkolbenvorraum
- 30: Hinteres Ende des Kanals 27
- 31: Schlauchleitung
- 32: Austrittsöffnung des Mischers 16
- 33: Drucksensor
- 34: Kolbeneinspritzeinheit
- 35: Einspritzkolbenvorraum
- 36: Einspritzkolben
- 37: Elastische Ringe
- 38: Erster Dosierzylinder
- 39: Zweiter Doseirzylinder
- 40: Erstes Reservoir bzw. Dosierkolbenvorraum
- 41: Zweites Reservoir bzw. Dosierkolbenvorraum
- 42: Erster Dosierkolben
- 43: Zweiter Dosierkolben
- 44: Erste Kolben-Zylinder-Einheit
- 45: Zweite Kolben-Zylinder-Einheit
- 46: Erster hinterer Positionsgeber
- 47: Erster vorderer Postionsgeber
- 48: Zweiter hinterer Positionsgeber
- 49: Zweiter vorderer Positionsgeber
- 50: Erste Schlauchleitung
- 51: Zweite Schlauchleitung
- 52: Erstes Ventil
- 53: Zweites Ventil
- 54: Erste Kolbenstange
- 55: Zweite Kolbenstange

## Patentansprüche

1. Verfahren zum Spritzgießen von aus mehreren Komponenten bestehenden Gemischen, insbesondere von Flüssigsilikonkautschuk (LSR), wobei die Ausgangskomponenten (A, B) sowie etwaige Zusatzstoffe (F) von einer Vorrats- und Dosieranlage (1) einem Mischer (16) zugeführt und in diesem gemischt werden, und wobei das Gemisch anschließend einer Einspritzeinheit (21, 34) einer Spritzgießmaschine zugeführt wird,
**dadurch gekennzeichnet,**
**daß** von der Vorrats- und Dosieranlage (1) ein Mehrfaches der für einen Spritzgußzyklus erforderlichen Menge an Ausgangsmaterial durch den Mischer (16) in ein Reservoir (29) gefördert wird, daß von diesem Reservoir (29) nach und nach Gemisch an die Einspritzeinheit (21, 34) der Spritzgießmaschine abgegeben wird und daß stets erneut ein Mehrfaches der für einen Spritzgußzyklus erforderlichen Menge an Augangsmaterial in das Reservoir (29) gefördert wird, wenn dieses zu einem bestimmten Grad entleert worden ist.

2. Verfahren nach Anspruch 1,
**dadurch gekennzeichnet,**
**daß** von dem Reservoir (29) im wesentlichen die für einen Spritzgußzyklus erforderliche Menge an Gemisch an die Einspritzeinheit (21, 34) abgegeben wird.

3. Verfahren nach Anspruch 1 oder 2,
**dadurch gekennzeichnet,**
**daß** das Reservoir (29) im wesentlichen vollständig entleert wird, bevor erneut ein Mehrfaches der für einen Spritzgußzyklus erforderlichen Menge an Ausgangsmaterial von der Vorrats- und Dosieranlage (1) über den Mischer (16) in das Reservoir (29) gefördert wird.

4. Verfahren nach einem der Ansprüche 1 bis 3,
**dadurch gekennzeichnet,**
**daß** das Reservoir (29) bei jedem Füllvorgang im wesentlichen vollständig befüllt wird.

5. Verfahren nach einem der Ansprüche 1 bis 4,
**dadurch gekennzeichnet,**
**daß** beim Füllen des Reservoirs (29) das 3- bis 20-fache, vorzugsweise das 5- bis 10-fache, der für einen Spritzgießzyklus benötigten Menge an Ausgangsmaterial von der Vorrats- und Dosieranlage (1) in das Reservoir (29) gefördert wird.

6. Verfahren zum Spritzgießen von aus mehreren Komponenten bestehenden Gemischen, insbesondere von Flüssigsilikonkautschuk (LSR), wobei die Ausgangskomponenten (A, B) sowie etwaige Zusatzstoffe (F) von einer Vorrats- und Dosieranlage (1) einem Mischer (16) zugeführt und in diesem gemischt werden, und wobei das Gemisch anschließend einer Einspritzeinheit (21, 34) einer Spritzgießmaschine zugeführt wird,
**dadurch gekennzeichnet,**
**daß** von der Vorrats- und Dosieranlage (1) jeweils ein Mehrfaches der für einen Spritzgußzyklus erforderlichen Menge an Ausgangsmaterial durch den Mischer (16) wechselweise in zwei Reservoire (40, 41) gefördert wird, daß von diesen Reservoiren (40, 41) nach und nach Gemisch an die Einspritzeinheit (21, 34) der Spritzgießmaschine abgegeben wird, und daß jeweils stets erneut ein Mehrfaches der für einen Spritzgußzyklus erforderlichen Menge an Augangsmaterial wechselweise in die Reservoire (40, 41) gefördert wird, wenn diese zu einem bestimmten Grad entleert worden sind, wobei jeweils von einem Reservoir Gemisch an die Einspritzeinheit (21, 34) abgegeben wird, während das andere Reservoir mit Gemisch gefüllt wird.

7. Verfahren nach Anspruch 6,
**dadurch gekennzeichnet,**
**daß** im wesentlichen die für einen Spritzgußzyklus erforderliche Menge an Gemisch von dem zu entleerenden Reservoir an die Einspritzeinheit (21, 34) abgegeben wird.

8. Verfahren nach Anspruch 6 oder 7,
**dadurch gekennzeichnet,**
**daß** jedes Reservoir (40, 41) im wesentlichen vollständig entleert wird, bevor erneut ein Mehrfaches der für einen Spritzgußzyklus erforderlichen Menge an Ausgangsmaterial von der Vorrats- und Dosieranlage (1) über den Mischer (16) in dieses Reservoir (40, 41) gefördert wird.

9. Verfahren nach einem der Ansprüche 6 bis 8,
**dadurch gekennzeichnet,**
**daß** jedes Reservoir (40, 41) bei jedem Füllvorgang im wesentlichen vollständig befüllt wird.

10. Verfahren nach einem der Ansprüche 6 bis 9,
**dadurch gekennzeichnet,**
**daß** jedes Reservoir (40, 41) mit dem 3- bis 20-fachen, vorzugsweise dem 5- bis 10-fachen, der für einen Spritzgießzyklus benötigten Menge an Gemisch gefüllt wird.

11. Vorrichtung zum Spritzgießen von aus mehreren Komponenten bestehenden Gemischen, insbesondere von Flüssigsilikonkautschuk (LSR), mit einer Vorrats- und Dosieranlage (1) für die Komponenten (A,B), einem Mischer (16), einer Einspritzeinheit (21, 34) sowie einem Werkzeug (22),
**dadurch gekennzeichnet,**
**daß** der Einspritzeinheit (21,34) ein Reservoir (29) vorgeschaltet ist, das zur Aufnahme eines Mehrfachen der für einen Spritzgußzyklus benötigten Menge an Ausgangsmaterial ausgelegt ist.

12. Vorrichtung nach Anspruch 11,
**dadurch gekennzeichnet,**
**daß** als Reservoir (29) der Vorraum eines Dosierkolbens (26) eines Dosierzylinders (25) vorgesehen ist.

13. Vorrichtung nach Anspruch 12,
**dadurch gekennzeichnet,**
**daß** der Dosierkolben (26) über wenigstens einen Kanal (27) verfügt, dessen vorderes Ende (28) in den Dosierkolbenvorraum (29) mündet und dessen hinteres Ende (30) über eine Schlauchverbindung (31) und/oder eine ineinander verschiebbare Rohrverbindung mit dem Mischer (16) verbunden ist.

14. Vorrichtung nach einem der Ansprüche 12 oder 13,
**dadurch gekennzeichnet,**
**daß** am vorderen Ende des Dosierkolbenvorraums (29) wenigstens eine Einfüllöffnung vorgesehen ist, und daß zwischen diesen Einfüllöffnungen und dem Mischer (16) Schlauch- und/oder Rohrverbindungen (31) vorgesehen sind.

15. Vorrichtung nach einem der Ansprüche 11 bis 14,
**dadurch gekennzeichnet,**
**daß** als Einspritzeinheit eine Schneckenplastifiziereinheit (21) vorgesehen ist.

16. Vorrichtung nach einem der Ansprüche 11 bis 14,
**dadurch gekennzeichnet,**
**daß** als Einspritzeinheit eine Kolbeneinspritzeinheit (34) vorgesehen ist, die durch den Einspritzkolben (36) hindurch und/oder über seitlich in den Einspritzkolbenvorraum (35) mündende Einfüllöffnungen befüllbar ist.

17. Vorrichtung nach einem der Ansprüche 11 bis 16,
**dadurch gekennzeichnet,**
**daß** der Dosierkolben (26) und/oder der Einspritzkolben (35) an ihren in den Zylindern gleitenden Aussenseiten über elastische Bereiche (37) verfügen und/oder mit elastischen Komponenten (37) ausgestattet sind.

18. Vorrichtung nach einem der Ansprüche 11 bis 17
**dadurch gekennzeichnet,**
**daß** in den Gemischleitungen zwischen dem Mischer (16) und dem Reservoir (29) Elemente mit Rückströmsperrenfunktion vorgesehen sind, wobei die in der Schließstellung aneinanderliegenden Dichtflächen über elastische Bereiche verfügen und/oder mit elastischen Komponenten ausgestattet sind.

19. Vorrichtung zum Spritzgießen von aus mehreren Komponenten bestehenden Gemischen, insbesondere von Flüssigsilikonkautschuk (LSR), mit einer Vorrats- und Dosieranlage (1) für die Komponenten (A,B), einem Mischer (16), einer Einspritzeinheit (21, 34) sowie einem Werkzeug (22),
**dadurch gekennzeichnet,**
**daß** der Einspritzeinheit (21, 34) zwei Reservoire (40, 41) vorgeschaltet sind, die jeweils zur Aufnahme eines Mehrfachen der für einen Spritzgußzyklus benötigten Menge an Ausgangsmaterial ausgelegt sind.

20. Vorrichtung nach Anspruch 19,
**dadurch gekennzeichnet,**
**daß** als Reservoire (40, 41) die Vorräume von Dosierkolben (42, 43) von Dosierzylindern (38, 39) vorgesehen sind, daß am vorderen Ende des jeweiligen Dosierkolbenvorraums (40, 41) wenigstens eine Einfüllöffnung vorgesehen ist, und daß zwischen diesen Einfüllöffnungen und dem Mischer (16) Schlauch- und/oder Rohrverbindungen (31) vorgesehen sind.

21. Vorrichtung nach Anspruch 19 oder 20,
**dadurch gekennzeichnet,**
**daß** als, Reservoire (40, 41) die Vorräume von Dosierkolben (42, 43) von Dosierzylindern (38, 39) vorgesehen, daß die Dosierkolben (42, 43) und die Dosierkolbenstangen (54, 55) über Kanäle verfügen, deren vordere Enden in den jeweiligen Dosierkolbenvorraum (40, 41) münden und deren hintere Enden jeweils über Schlauchverbindungen und/oder ineinander verschiebbare Rohrverbindungen mit dem Mischer (16) verbunden sind.

22. Vorrichtung nach einem der Ansprüche 19 bis 21,
**dadurch gekennzeichnet,**
**daß** als Einspritzeinheit eine Schneckenplastifiziereinheit (21) vorgesehen ist.

23. Vorrichtung nach einem der Ansprüche 19 bis 21,
**dadurch gekennzeichnet,**
**daß** als Einspritzeinheit eine Kolbeneinspritzeinheit vorgesehen ist, die durch den Einspritzkolben hindurch und/oder über seitlich in den Einspritzkolbenvorraum mündende Einfüllöffnungen befüllbar ist.

24. Vorrichtung nach einem der Ansprüche 19 bis 23,
**dadurch gekennzeichnet,**
**daß** der Dosierkolben (26) und/oder der Einspritzkolben (35) an ihren in den Zylindern gleitenden Aussenseiten über elastische Bereiche (37) verfügen und/oder mit elastischen Komponenten (37) ausgestattet sind.

25. Vorrichtung nach einem der Ansprüche 19 bis 24,
**dadurch gekennzeichnet,**
**daß** in den Gemischleitungen zwischen dem Mischer (16) und den Reservoirs (40, 41) Elemente mit Rückströmsperrenfunktion vorgesehen sind, wobei die in der Schließstellung aneinanderliegenden Dichtflächen über elastische Bereiche verfügen und/oder mit elastischen Komponenten ausgestattet sind.

## Claims

1. Method for the injection moulding of mixtures consisting of several components, in particular liquid silicone rubber (LSR), whereby the starting materials (A, B) and any additives (F) are supplied from a storage and dispensing unit (1) to a mixer (16) and are mixed in the latter, and whereby the mixture is subsequently fed into an injection unit (21, 34) of an injection moulding machine, **characterised in that** from the storage and dispensing unit (1) a multiple of the amount of starting material required for an injection moulding cycle is conveyed through the mixer (16) into a reservoir (29), **in that** from said reservoir (29) the mixture is added gradually to the injection unit (21, 34) of the injection moulding machine, and **in that** a multiple of the amount of starting material required for an injection moulding cycle is repeatedly conveyed into the reservoir (29) as soon as the latter has been emptied by a certain amount.

2. Method according to claim 1, **characterised in that** the amount of mixture necessary for an injection moulding cycle is supplied from the reservoir (29) to the injection unit (21, 34).

3. Method according to claim 1 or 2, **characterised in that** the reservoir (29) is completely emptied before a multiple of the amount of starting material required for an injection moulding cycle is supplied from the storage and dispensing unit (1) via the mixer (16) into the reservoir (29).

4. Method according to one of claims 1 to 3, **characterised in that** the reservoir (29) is filled completely with each filling procedure.

5. Method according to one of claims 1 to 4, **characterised in that** on filling the reservoir (29) 3 to 20 times, preferably 5 to 10 times, the amount of starting material required for an injection moulding cycle is conveyed from the storage and dispensing unit (1) to the reservoir (29).

6. Method for the injection moulding of mixtures consisting of several components, in particular liquid silicone rubber (LSR), whereby the starting materials (A, B) and any additives (F) are supplied from a storage and dispensing unit (1) to a mixer (16) and are mixed in the latter, and whereby the mixture is subsequently fed into an injection unit (21, 34) of an injection moulding machine, **characterised in that** from the storage and dispensing unit (1) a multiple of the amount of starting material required for an injection moulding cycle is conveyed through the mixer (16) alternately into two reservoirs (40, 41), **in that** from said reservoirs (40, 41) the mixture is gradually fed into the injection unit (21, 34) of the injection moulding machine, and **in that** a multiple of the amount of starting material required for an injection moulding cycle is sent repeatedly to the reservoirs (40, 41), as soon as the latter have been emptied by a certain amount, whereby mixture is fed from one reservoir to the injection unit (21, 34) whilst the other reservoir is being filled with mixture.

7. Method according to claim 6, **characterised in that** the amount of mixture required for an injection moulding cycle is transferred from the reservoir to be emptied to the injection unit (21, 34).

8. Method according to claim 6 or 7, **characterised in that** each reservoir (40, 41) is emptied completely, before a multiple of the amount of starting material required for the injection moulding cycle is supplied from the storage and dispensing unit (1) to the reservoir (40, 41) via the mixer (16).

9. Method according to one of claims 6 to 8, **characterised in that** each reservoir (40, 41) is filled completely with each filling procedure.

10. Method according to one of claims 6 to 9, **characterised in that** each reservoir (40, 41) is filled with 3 to 20 times, preferably 5 to 10 times, the amount of mixture required for an injection moulding cycle.

11. Apparatus for the injection moulding of mixtures consisting of several components, in particular liquid silicone rubber (LSR), with a storage and dispensing unit (1) for the components (A, B), a mixer (16), an injection unit (21, 34) and a tool (22), **characterised in that** the injection unit (21, 34) is arranged downstream of a reservoir (29) which is designed for holding a multiple of the amount of starting material required for an injection moulding cycle.

12. Apparatus according to claim 11, **characterised in that** the reservoir (29) is in the form of an antechamber in front of the metering plunger (26) of a metering cylinder (25).

13. Apparatus according to claim 12, **characterised in that** the metering plunger (26) is provided with at least one channel (27), the leading end (28) of which opens into the dispensing plunger antechamber (29) and the trailing end (30) of which is connected to the mixer (16) by a tube connection (31) and/or a telescopic pipe connection.

14. Apparatus according to one of claims 12 or 13, **characterised in that** at least one filling opening is provided at the front end of the dispensing plunger antechamber (29), and **in that** tube and/or pipe connections (31) are provided between these filling openings and the mixer (16).

15. Apparatus according to one of claims 11 to 14, **characterised in that** the injection unit is a screw-type plasticizing unit (21).

16. Apparatus according to one of claims 11 to 14, **characterised in that** the injection unit is a plunger-type injection unit (34) which can be filled through the injection plunger (36) and/or through filling openings opening from the side into the injection plunger antechamber (35).

17. Apparatus according to one of claims 11 to 16, **characterised in that** the metering plunger (26) and/or the injection plunger (35) have elastic areas (37) on their outer sides sliding into the cylinders and/or are equipped with elastic components (37).

18. Apparatus according to one of claims 11 to 17, **characterised in that** in the mixture ducts between the mixer (16) and the reservoir (29) elements are provided with back flow valves, whereby the closed position of adjacent sealing surfaces have elastic zones and/or are equipped with elastic components.

19. Apparatus for the injection moulding of mixtures consisting of several components, in particular liquid silicone rubber (LSR) with a storage and dispensing unit (1) for the components (A, B), a mixer (16), an injection unit (21, 34) and a tool (22), **characterised in that** the injection unit (21, 34) is downstream of two reservoirs (40, 41) which are designed for holding a multiple amount of the starting material required for an injection moulding cycle.

20. Apparatus according to claim 19, **characterised in that** the antechambers of metering plungers (42, 43) of metering cylinders (38, 39) are provided as reservoirs (40, 41), **in that** at the front end of the respective metering plunger antechamber (40, 41) at least one filling opening is provided, and **in that** between these filling openings and the mixer (16) tube and/or pipe connections (31) are provided.

21. Apparatus according to claim 19 or 20, **characterised in that** that the antechambers of metering plungers (42,43) of metering cylinders (38, 39) are provided as reservoirs (40, 41), **in that** the metering plungers (42, 43) and the metering plunger rods (54, 55) are provided with channels, the front ends of which open into the respective metering plunger antechamber (40, 41) and the rear ends of which are connected by hose connection and/or telescopic pipe connections with the mixer(16).

22. Apparatus according to one of claims 19 to 21, **characterised in that** a screw-type plasticizing unit (21) is provided as the injection unit.

23. Apparatus according to one of claims 19 to 21, **characterised in that** a plunger injection unit is provided as an injection unit which can be filled through the injection plunger and/or via filling openings opening from the side into the injection plunger antechamber.

24. Apparatus according to one of claims 19 to 23, **characterised in that** the metering plunger (26) and/or the injection plunger (35) have elastic areas (37) on their outsides sliding into the cylinders and/or are equipped with elastic components (37).

25. Apparatus according to one of claims 19 to 24, **characterised in that** in the mixture ducts between the mixer (16) and the reservoirs (40, 41) elements are provided with a backflow valve function, whereby the sealing surfaces adjacent to one another in the closed position have elastic regions and/or are provided with elastic components.

## Revendications

1. Procédé de moulage par injection de mélanges constitués de plusieurs composants, notamment d'un caoutchouc siliconé liquide (LSR), les composants de départ (A, B) ainsi que d'éventuels adjuvants (F) étant amenés d'un système de stockage et de dosage (1) à un mélangeur (16) et mélangés dans celui-ci, et le mélange étant ensuite amené à une unité d'injection (21, 34) d'une machine de moulage par injection,
**caractérisé en ce que**
un multiple de la quantité de matériau de départ nécessaire pour un cycle de moulage par injection est acheminée du système de stockage et de dosage (1) à un réservoir (29) en passant par le mélangeur (16), **en ce que** le mélange est distribué progressivement du réservoir (29) à l'unité d'injection (21, 34) de la machine de moulage par injection et **en ce qu'**un multiple de la quantité de matériau de départ nécessaire pour un cycle de moulage par injection est constamment réacheminée dans le réservoir (29), lorsque celui-ci a été vidé jusqu'à un certain degré.

2. Procédé selon la revendication 1,
**caractérisé en ce que**
la quantité de mélange nécessaire pour un cycle de moulage par injection est distribuée sensiblement du réservoir (29) à l'unité d'injection (21, 34).

3. Procédé selon la revendication 1 ou 2,
**caractérisé en ce que**
le réservoir (29) est sensiblement entièrement vidé avant qu'un multiple de la quantité de matériau de départ nécessaire pour un cycle de moulage par injection soit réacheminée du système de stockage et de dosage (1) au réservoir (29) en passant par le mélangeur (16).

4. Procédé selon l'une quelconque des revendications 1 à 3,
**caractérisé en ce que**
le réservoir (29) est rempli sensiblement entièrement à chaque processus de remplissage.

5. Procédé selon l'une quelconque des revendications 1 à 4,
**caractérisé en ce que**
lors du remplissage du réservoir (29), le triple au vingtuple, de préférence le quintuple au décuple de la quantité de matériau de départ nécessaire,pour un cycle de moulage par injection est acheminé du système de stockage et de dosage (1) au réservoir (29).

6. Procédé de moulage par injection de mélanges constitués de plusieurs composants, notamment d'un caoutchouc siliconé liquide (LSR), les composants de départ (A, B) ainsi que d'éventuels adjuvants (F) étant acheminés d'un système de stockage et de dosage (1) à un mélangeur (16) et mélangés dans celui-ci, et le mélange étant ensuite amené à une unité d'injection (21, 34) d'une machine de moulage par injection,
**caractérisé en ce que**
respectivement un multiple de la quantité de matériau de départ nécessaire pour un cycle de moulage par injection est acheminé du système de stockage et de dosage (1) à tour de rôle à deux réservoirs (40, 41) en passant par le mélangeur (16), **en ce que** le mélange est distribué progressivement de ces réservoirs (40, 41) à l'unité de moulage par injection (21, 34) de la machine de moulage par injection, et **en ce que** respectivement un multiple de la quantité de matériau de départ nécessaire pour un cycle de moulage par injection est constamment réacheminée à tour de rôle aux réservoirs (40, 41), lorsque ceux-ci ont été vidés selon un certain degré, le mélange étant respectivement délivré d'un réservoir à l'unité d'injection (21, 34), tandis que l'autre réservoir est rempli du mélange.

7. Procédé selon la revendication 6,
**caractérisé en ce que**
la quantité de mélange nécessaire pour un cycle de moulage par injection est sensiblement distribuée du réservoir destiné à être vidé à l'unité d'injection (21, 34).

8. Procédé selon la revendication 6 ou 7,
**caractérisé en ce que**
chaque réservoir (40, 41) est vidé sensiblement entièrement avant qu'un multiple de la quantité de matériau de départ nécessaire pour un cycle de moulage par injection ait été réacheminée du système de stockage et de dosage (1) à ce réservoir (40, 41) en passant par le mélangeur (16).

9. Procédé selon l'une quelconque des revendications 6 à 8,
**caractérisé en ce que**
chaque réservoir (40, 41) est sensiblement entièrement rempli à chaque processus de remplissage.

10. Procédé selon l'une quelconque des revendications 6 à 9,
**caractérisé en ce que**
chaque réservoir (40, 41) est rempli du triple au vingtuple, de préférence du quintuple au décuple de la quantité de matériau de départ nécessaire pour un cycle de moulage par injection.

11. Dispositif de moulage par injection de mélanges constitués de plusieurs composants, notamment d'un caoutchouc siliconé liquide (LSR), doté d'un système de stockage et de dosage (1) pour les composants (A, B), d'un mélangeur (16), d'une unité d'injection (21, 34) ainsi que d'un moule (22),
**caractérisé en ce**
**qu'**un réservoir est monté devant l'unité d'injection (21, 34), lequel est étudié pour recevoir un multiple de la quantité de matériau de départ nécessaire pour un cycle de moulage par injection.

12. Dispositif selon la revendication 11,
**caractérisé en ce que**
l'antichambre d'un piston de dosage (26) d'un cylindre de dosage (25) est prévue comme réservoir (29).

13. Dispositif selon la revendication 12,
**caractérisé en ce que**
le piston de dosage (26) dispose d'au moins un canal (27), dont l'extrémité avant (28) débouche dans l'antichambre de piston de dosage (29) et dont l'extrémité arrière (30) est reliée au mélangeur (16) par un assemblage de tuyaux (31) et/ou un assemblage de tubes mobiles les uns dans les autres.

14. Dispositif selon l'une quelconque des revendications 12 ou 13,
**caractérisé en ce**
**qu'**au moins une ouverture de remplissage est prévue sur l'extrémité avant de l'antichambre de piston de dosage (29), et en ce que des assemblages de tuyaux et/ou de tubes (31) sont prévus entre ces ouvertures de remplissage et le mélangeur (16).

15. Dispositif selon l'une quelconque des revendications 11 à 14,
**caractérisé en ce**
**qu'**une unité de plastification à vis sans fin (21) est prévue comme unité d'injection.

16. Dispositif selon l'une quelconque des revendications 11 à 14,
**caractérisé en ce**
**qu'**une unité d'injection à piston (34) est prévue comme unité d'injection, laquelle peut être remplie à travers le piston d'injection (36) et/ou par l'intermédiaire d'ouvertures de remplissage débouchant latéralement dans l'antichambre de piston d'injection (35).

17. Dispositif selon l'une quelconque des revendications 11 à 16,
**caractérisé en ce que**
le piston de dosage (26) et/ou le piston d'injection (35) disposent sur leurs faces externes glissant dans les cylindres de zones élastiques (37) et/ou sont équipés de composants élastiques (37).

18. Dispositif selon l'une quelconque des revendications 11 à 17,
**caractérisé en ce que**
des éléments dotés d'une fonction anti-reflux sont prévus dans les conduites de mélange entre le mélangeur (16) et le réservoir (29), les surfaces d'étanchéité superposées dans la position fermée disposant de zones élastiques et/ou étant équipées de composants élastiques.

19. Dispositif de moulage par injection de mélanges constitués de plusieurs composants, notamment d'un caoutchouc siliconé liquide (LSR), doté d'un système de stockage et de dosage (1) pour les composants (A, B), d'un mélangeur (16), d'une unité d'injection (21, 34) ainsi que d'un moule (22),
**caractérisé en ce que**
deux réservoirs (40, 41) sont montés devant l'unité d'injection (21, 34), lesquels sont étudiés pour recevoir un multiple de la quantité de matériau de départ nécessaire pour un cycle de moulage par injection.

20. Dispositif selon la revendication 19,
**caractérisé en ce que**
les antichambres de pistons de dosage (42, 43) de cylindres de dosage (38, 39) sont prévues comme réservoirs (40, 41), **en ce qu'**au moins une ouverture de remplissage est prévue sur l'extrémité avant de chaque antichambre de piston de dosage (40, 41), et **en ce que** des assemblages de tuyaux et/ou de tubes (31) sont prévus entre ces ouvertures de remplissage et le mélangeur (16).

21. Dispositif selon la revendication 19 ou 20,
**caractérisé en ce que**
les antichambres de pistons de dosage (42, 43) de cylindres de dosage (38, 39) sont prévues comme réservoirs (40, 41), **en ce que** les pistons de dosage (42, 43) et les tiges de piston de dosage (54, 55) disposent de canaux, dont les extrémités avant débouchent dans l'antichambre de piston de dosage (40, 41) respective et dont les extrémités arrière sont reliées au mélangeur (16) respectivement par des assemblages de tuyaux et/ou des assemblages de tubes mobiles les uns dans les autres.

22. Dispositif selon l'une quelconque des revendications 19 à 21,
**caractérisé en ce**
**qu'**une unité de plastification à vis sans fin (21) est prévue comme unité d'injection.

23. Dispositif selon l'une quelconque des revendications 19 à 21,
**caractérisé en ce**
**qu'**une unité d'injection à piston est prévue comme unité d'injection, laquelle peut être remplie à travers le piston d'injection et/ou par l'intermédiaire d'ouvertures de remplissage débouchant latéralement dans l'antichambre de piston d'injection.

24. Dispositif selon l'une quelconque des revendications 19 à 23,
**caractérisé en ce que**
le piston de dosage (26) et/ou le piston d'injection (35) disposent sur leurs faces externes glissant dans les cylindres de zones élastiques (37) et/ou sont équipés de composants élastiques (37).

25. Dispositif selon l'une quelconque des revendications 19 à 24,
**caractérisé en ce que**
des éléments dotés d'une fonction anti-reflux sont prévus dans les conduites de mélange entre le mélangeur (16) et les réservoirs (40, 41), les surfaces d'étanchéité superposées dans la position fermée disposant de zones élastiques et/ou étant équipées de composants élastiques.
